(19) Europäisches Patentamt
European Patent Office
Office européen des brevets

(11) Veröffentlichungsnummer : **0 598 729 B1**

(12) **EUROPÄISCHE PATENTSCHRIFT**

(45) Veröffentlichungstag der Patentschrift :
**11.10.95 Patentblatt 95/41**

(51) Int. Cl.⁶ : **H01G 7/02, H04R 19/01**

(21) Anmeldenummer : **92909830.9**

(22) Anmeldetag : **14.05.92**

(86) Internationale Anmeldenummer :
**PCT/EP92/01062**

(87) Internationale Veröffentlichungsnummer :
**WO 93/04495 04.03.93 Gazette 93/06**

(54) **ELEKTRETSTRUKTUR, HERSTELLUNGSVERFAHREN DAFÜR UND DEREN VERWENDUNG IN EINEM ELEKTROAKUSTISCHEN WANDLER.**

(30) Priorität : **13.08.91 NL 9101381**

(43) Veröffentlichungstag der Anmeldung :
**01.06.94 Patentblatt 94/22**

(45) Bekanntmachung des Hinweises auf die
Patenterteilung :
**11.10.95 Patentblatt 95/41**

(84) Benannte Vertragsstaaten :
**DE FR GB IT NL**

(56) Entgegenhaltungen :
**AU-B- 449 361**
**FR-A- 2 307 357**
**US-A- 3 786 495**
**US-A- 3 946 422**
**US-A- 4 910 840**
**WORLD PATENTS INDEX LATEST Section Ch,**
**Week 9150, Derwent Publications Ltd.,London,**
**GB ; Class A, AN 91-367435**

(73) Patentinhaber : **SIEMENS**
**AKTIENGESELLSCHAFT**
**Wittelsbacherplatz 2**
**D-80333 München (DE)**
Patentinhaber : **SIEMENS NEDERLAND N.V.**
**Prinses Beatrixlaan 26**
**NL-2500 BB Den Haag (NL)**

(72) Erfinder : **HÖNLEIN, Wolfgang Dr.**
**Ludwig-Thoma-Str. 60**
**D-82008 Unterhaching (DE)**
Erfinder : **SPITZER, Andreas Dr.**
**Mozartstrasse 52 c**
**D-85521 Ottobrunn (DE)**
Erfinder : **SPRENKELS, Adrianus, Dr.**
**Gondel 17/39**
**NL-8243 BV Lelystad (NL)**

(74) Vertreter : **Fuchs, Franz-Josef, Dr.-Ing.**
**Postfach 22 13 17**
**D-80503 München (DE)**

## Beschreibung

Die Erfindung betrifft eine Elektretstruktur, wie sie zur Speicherung von elektrischer Ladung zur Aufrechterhaltung eines elektrischen Feldes in einem Kondensatormikrophon Einsatz findet sowie ein Herstellverfahren für eine Elektretstruktur und deren Verwendung in einem elektroakustischen Wandler. Kondensatormikrophone mit einer integrierten ladungsspeichernden Schicht werden Elektretmikrophone genannt. Sie finden z. B. in miniaturisierten Hörgeräten Verwendung.

Ein wichtiges Entwurfskriterium für eine Elektretstruktur ist die maximale Ladungsmenge, die pro Oberflächeneinheit gespeichert werden kann. Ein weiteres wichtiges Entwurfskriterium für eine Elektretstruktur ist die Abnahme der Ladung, ausgedrückt in z. B. Volt pro Zeiteinheit, die so klein wie möglich sein sollte. Dieser Ladungsabfall wird verursacht durch Volumen- und Oberflächenleitung in dem Elektretmaterial, die unter anderem durch die Umgebungstemperatur und Feuchtigkeit beeinflußt werden.

Eine Elektretstruktur der obengenannten Art ist z. B. aus der amerikanischen Patentschrift US-PS 4 910 840 bekannt. Dabei wird als Material für eine ladungsspeichernde Schicht $SiO_2$ benutzt. Die Oberfläche der ladungsspeichernden Schicht ist durch eine Behandlung mit Hexamethyldisilazan (HMDS) oder einem vergleichbaren Stoff hydrophob gemacht. Dadurch wird erreicht, daß Feuchtigkeitsablagerungen aus der umgebenden Atmosphäre an der Oberfläche der ladungsspeichernden Schicht vermieden werden. Diese Maßnahme führt auch zu einer über längere Zeit verminderten Leitfähigkeit an der Oberfläche der ladungsspeichernden Schicht, so daß das Abfließen von Ladung aus der ladungsspeichernden Schicht vermindert wird und dadurch die durch die Abnahme der Ladung bestimmte Lebensdauer der Elektretstruktur vergrößert wird.

Der Erfindung liegt das Problem zugrunde, die bekannte Elektretstruktur zu verbessern und eine Elektretstruktur zu schaffen mit einer in Bezug auf die bekannte Elektretstruktur vergrößerten Lebensdauer. Es soll insbesondere eine Elektretstruktur angegeben werden, die auch bei hohen Temperaturen und hoher relativer Umgebungsfeuchtigkeit eine besonders niedrige Volumen- und Oberflächenleitung aufweist und dadurch über längere Zeit einen stabilen Arbeitspunkt hat.

Dieses Problem wird erfindungsgemäß gelöst durch eine Elektretstruktur nach Anspruch 1.

Die Erfindung nutzt die Tatsache aus, daß elektrische Ladungen in Potentialtöpfen, auch Potentialmulden oder Traps genannt, eingefangen und gespeichert werden. Durch den erfindungsgemäßen Aufbau der ladungsspeichernden Schicht in einer inhomogenen Materialzusammensetzung wird erreicht, daß die Ladungsmenge in den ersten Bereichen mit dem großen Einfangquerschnitt für Ladungsträger gespeichert wird und daß ein Abfließen der Ladungsträger aus den ersten Bereichen durch die zweiten Bereiche, die eine Potentialbarriere bilden, verhindert wird.

Diese Idee läßt sich realisieren durch Ausbilden der ladungsspeichernden Schicht als Schichtenfolgen aus mindestens drei Schichten, wobei die mittlere Schicht so gewählt wird, daß sie einen großen Einfangquerschnitt für Ladungsträger aufweist und die beiden äußeren Schichten so gewählt werden, daß sie eine Potentialbarriere für in der mittleren Schicht gespeicherte Ladungsträger darstellen. Dieser Effekt läßt sich z. B. durch Auswahl von Materialien erzielen, deren Leitungsbandkanten sich stark unterscheiden, dieses ist z. B. der Fall, wenn für die mittlere Schicht $Si_3N_4$ und für die beiden äußeren Schichten $SiO_2$ verwendet wird.

Zur Speicherung der Ladung in einer Dreifachschicht sind bei Verwendung von $SiO_2$ für die beiden äußeren Schichten auch die Materialien $Ta_2O_5$, $Al_2O_3$ oder $TiO_2$ für die mittlere Schicht geeignet.

Es liegt im Rahmen der Erfindung, in einer Dreifachschichtstruktur für die beiden äußeren Schichten $Al_2O_3$ und für die mittlere Schicht $Ta_2O_5$ oder für die beiden äußeren Schichten $Si_3N_4$ und für die mittlere Schicht $Ta_2O_5$ oder $TiO_2$ zu verwenden.

Es liegt im Rahmen der Erfindung, anstelle einer Dreischichtstruktur eine Fünfschichtstruktur als ladungsspeichernde Schicht vorzusehen. Dabei weisen jeweils die zweite und vierte Schicht einen hohen Einfangquerschnitt für Ladungsträger auf, während die erste, dritte und fünfte Schicht jeweils eine Potentialbarriere gegen das Abfließen der Ladungsträger darstellen. In dieser Ausführungsform kann eine größere Ladungsmenge gespeichert werden. Die Auswahl der geeigneten Materialien für die vierte und fünfte Schicht erfolgt analog den Beispielen für die zweite und dritte Schicht.

Eine weitere Ausführungsform der erfindungsgemäßen Idee besteht darin, die ladungsspeichernde Schicht durchgehend aus einem dielektrischen Material vorzusehen, in dem durch Implantation von Fremdatomen lokale Potentialtöpfe zum Einfangen der Ladungsträger vorgesehen sind. Dieses ist z. B. in einer $SiO_2$-Schicht, in die Wolfram, Platin, Chrom, Nickel, Palladium oder Iridium implantiert ist, der Fall.

Ferner ist es möglich, anstelle einer Dreischichtstruktur eine Siebenschichtstruktur, Neunschichtstruktur usw. als ladungsspeichernde Schicht vorzusehen. Die zusätzlichen Schichten weisen dabei jeweils abwechselnd einen hohen Einfangquerschnitt für Ladungsträger auf bzw. stellen eine Potentialbarriere gegen das Abfließen von Ladungsträgern aus der benachbarten Schicht dar.

Oberhalb oder unterhalb der Mehrschichtstruktur können weitere Schichten angeordnet sein, die jedoch nicht zur Ladungsspeicherung beitragen.

Es ist besonders vorteilhaft, die Elektretstruktur mit einem Substrat aus einkristallinem Silizium vorzusehen. In diesem Fall ist es möglich, beim Aufbau eines Hörgerätes nicht nur die Elektretstruktur sondern weitere Komponenten eines dafür erforderlichen elektroakustischen Wandlers auf dem Substrat vorzusehen.

Weitere Ausgestaltungen der Erfindung gehen aus den übrigen Ansprüchen hervor.

Im folgenden wird die Erfindung anhand von Ausführungsbeispielen und der Figuren näher erläutert.

Fig. 1    zeigt eine Elektretstruktur mit einer aus drei Schichten bestehenden ladungsspeichernden Schicht.

Fig. 2    zeigt eine Potentialverteilung der ladungsspeichernden Schicht entlang dem mit II-II bezeichneten Schnitt in Fig. 1.

Fig. 3    zeigt eine Elektretstruktur mit einer ladungsspeichernden Schicht, die mit Fremdatomen versehen ist.

Fig. 4    zeigt eine Potentialverteilung der ladungsspeichernden Schicht entlang dem in Fig. 3 mit IV-IV bezeichneten Schnitt.

Fig. 5    zeigt eine Elektretstruktur mit einer aus fünf Schichten bestehenden ladungsspeichernden Schicht.

Fig. 6    zeigt eine Potentialverteilung entlang den in Fig. 5 mit VI-VI bezeichneten Schnitt.

Die Darstellungen in den Figuren sind nicht maßstabsgerecht, so daß die Dickeverhältnisse der in den Figuren dargestellten Schichten keine Rückschlüsse auf in der Praxis geeignete Dickeverhältnisse zulassen.

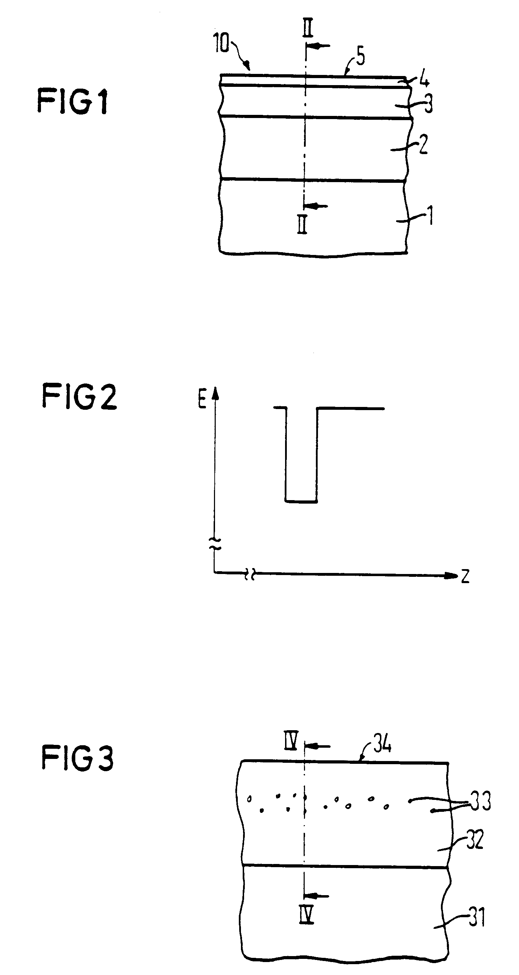

Fig. 1 zeigt schematisch einen Ausschnitt einer durch das Bezugszeichen 10 angedeuteten Elektretstruktur. Die Elektretstruktur 10 umfaßt ein Substrat 1 aus z. B. einkristallinem Silizium. Das Substrat 1 kann zur Herstellung einer einzigen Elektretstruktur bestimmt sein. Das Substrat 1 kann aber auch in mehrere diskrete Elektrete geteilt werden. Ferner ist es möglich, auf dem Substrat 1 eine mindestens eine Elektretstruktur umfassende Einrichtung, z. B. einen elektroakustischen Wandler, mit weiteren dazu geeigneten Strukturen herzustellen. Schließlich können auf dem Substrat 1 gleichzeitig mehrere eine Elektretstruktur umfassende Einrichtungen hergestellt werden, die anschließend vereinzelt werden. Außer aus Silizium kann das Substrat auch aus anderen Materialien bestehen, die als Substrat für eine Elektretstruktur geeignet sind.

Auf einer Oberfläche des Substrats 1 befindet sich eine erste Schicht 2 mit einer sehr geringen Volumenleitung. Die erste Schicht 2 besteht aus dielektrischem Material. Die erste Schicht 2 wirkt als Isolator. Die erste Schicht 2 besteht z. B. aus $SiO_2$. $SiO_2$ läßt sich auf dem Substrat 1 aus Silizium besonders einfach aufbringen.

Die Dicke der ersten Schicht 2 beträgt vorzugsweise 0,01 µm bis 5 µm. Die Grenzen für die Dicke dieser Schicht werden einerseits bestimmt durch die erforderliche Durchschlagsspannung und andererseits durch die Zeit, die nötig ist, um die erste Schicht 2 aufzubringen. In der Praxis hat sich eine Dicke von ungefähr 1 µm als gut geeignet gezeigt.

Auf der ersten Schicht 2 befindet sich eine zweite Schicht 3, die ebenfalls aus dielektrischem Material besteht, das sich von dem Material der ersten Schicht unterscheidet und das vorzugsweise ebenfalls eine sehr geringe Volumenleitung aufweist. Die zweite Schicht 3 besteht aus einem Material, dessen Leitungsbandkante einen großen Abstand zur Leitungsbandkante des Materials der ersten Schicht 2 aufweist. Die zweite Schicht 3 besteht z. B. aus $Si_3N_4$. Die Dicke der zweiten Schicht 3 beträgt vorzugsweise 1 nm bis 1 µm, wobei eine Dicke von ungefähr 20 nm bevorzuct wird. Die Untergrenze der Schichtdicke wird durch die zu speichernde Ladung bestimmt, während es theoretisch keine Obergrenze gibt. In der Praxis wird die Obergrenze jedoch durch die Zeit bestimmt, die erforderlich ist, um die zweite Schicht 3 aufzubringen.

Auf der zweiten Schicht 3 ist eine dritte Schicht 4 aus dielektrischem Material angeordnet. Die dritte Schicht 4 besteht aus einem Material, das sich von dem Material der zweiten Schicht 3 unterscheidet und das eine sehr geringe Volumenleitfähigkeit aufweist. Die Leitungsbandkante des Materials der dritten Schicht 4 hat wiederum einen großen Abstand zur Leitungsbandkante dessen Materials der zweiten Schicht 3. Das Material der dritten Schicht 4 kann dasselbe wie dasjenige der ersten Schicht 2 sein. Für die dritte Schicht 4 eignet sich $SiO_2$. Es ist nicht ausgeschlossen, für die dritte Schicht 4 ein anderes Material als für die zweite Schicht 3 zu verwenden.

Die Dicke der dritten Schicht 4 kann 1 nm bis 2 µm betragen. Vorzugsweise beträgt die Dicke der dritten Schicht 4 2 nm bis 20 nm, während eine Dicke von ungefähr 3 nm in der Praxis gut geeignet ist.

Die erste Schicht 2, die zweite Schicht 3 und die dritte Schicht 4 bilden eine ladungsspeichernde Schicht in der Elektretstruktur. Bedingt durch die Wahl der Materialien für diese Schichten ist der Leitungsbandabstand zwischen dem Material der zweiten Schicht 3 und demjenigen der ersten Schicht 2 bzw. der dritten Schicht 4 groß. Zusätzlich weist die zweite Schicht 3 einen großen Einfangquerschnitt für Ladungsträger auf. Das führt dazu, daß in die ladungsspeichernde Schicht 2, 3, 4 eingebrachte Ladungsträger in der zweiten Schicht 3 lokalisiert gespeichert werden. Die erste Schicht 2 und die dritte Schicht 4 bilden Potentialbarrieren, die ein Abfließen der Ladungsträger aus der zweiten Schicht 3 verhindern.

Der Potentialverlauf in der ladungsspeichernden Schicht 2, 3, 4 entlang dem mit II-II in Fig. 1 bezeichneten Schnitt ist für negative Ladungsträger, z. B. Elektronen, im Leitungsband schematisch in Fig. 2 dargestellt. Im Bereich der zweiten Schicht 3 zeigt der Potentialverlauf E einen Potentialtopf, inoem Ladungsträger eingefangen werden und den Ladungsträger nicht wieder verlassen können. Analoges gilt für positive Ladungsträger, z. B. Löcher, im Valenzband.

Eine vom Substrat 1 abgewandte Oberfläche der dritten Schicht 4, die in Fig. 1 mit dem Bezugszeichen 5 bezeichnet ist, ist auf ansich bekannte Weise mit einem hydrophob-machenden Stoff behandelt. Dazu ist z. B. Hexamethyldisilazan (HMDS) oder ein vergleichbarer Stoff geeignet. Die hydrophobe Oberfläche 5 verhindert, daß Feuchtigkeit die elektrischen Eigenschaften in diesem Bereich der dritten Schicht 4 nachteilig beeinflussen kann.

In der Elektretstruktur 10 ist die Ladung eingeschlossen in der zweiten Schicht 3 zwischen der ersten Schicht 2 und der dritten Schicht 4, so daß die Ladung nicht abfließen kann.

Die Funktionsweise der Elektretstruktur 10 wurde an zwei Beispielen getestet.

Beispiel 1:

Eine erfindungsgemäße Elektretstruktur mit dem anhand von Fig. 1 erläuterten Aufbau ist getestet worden in Bezug auf die Stabilität mit folgenden Spezifizierungen und unter folgenden Testbedingungen:

Spezifizierungen:

| | | | | | |
|---|---|---|---|---|---|
| Substrat 1 | Material | Silizium | Dicke | 500 | µm |
| erste Schicht 2 | Material | $SiO_2$ | Dicke | 1 | µm |
| zweite Schicht 3 | Material | $Si_3N_4$ | Dicke | 20 | nm |
| dritte Schicht 4 | Material | $SiO_2$ | Dicke | 3 | nm |

hydrophobe Oberfläche 5 der dritten Schicht 4 ist behandelt mit HMDS.

Mittels Korona-Entladung aufgebaute Elektretspannung:
160 V

Testbedingungen:

| | |
|---|---|
| relative Feuchtigkeit | 95 - 100 %, ohne das Kondensation auftritt |
| Temperatur | 60 °C |

Nach Verlauf von 46 Tagen wird ein Spannungsabfall von weniger als 0,5 Volt gemessen, d. h. weniger als 0,4 %. Dabei muß beachtet werden, daß in der Praxis die Meßgenauigkeit mit Rücksicht auf die Notwendigkeit, eine kontaktlose Spannungsmessung anzuwenden, ebenfalls 0,5 Volt beträgt, so daß der wirkliche Spannungsabfall vielleicht noch kleiner ist.

Zum Vergleich ist unter denselben Testbedingungen eine bekannte Elektretstruktur getestet worden, mit den Spezifikationen:

| | | | | | |
|---|---|---|---|---|---|
| Substrat | Material | Silizium | Dicke | 500 | µm |
| ladungsspeichernde Schicht | Material | $SiO_2$ | Dicke | 1 | µm |
| Elektretspannung | 160 Volt | | | | |

Nach 46 Tagen zeigte diese einen Spannungsabfall von 25 Volt, d. h. einen Abfall von mehr als 15 %.

Die erfindungsgemäße Elektretstruktur zeigt auch nach 100 Tagen einen Spannungsabfall von weniger als 0,5 %.

Beispiel 2:

Eine Elektretstruktur, die sich von der im Beispiel 1 beschriebenen nur dadurch unterscheidet, daß sie mit einer Elektretspannung von 320 Volt versehen ist, wird unter denselben Testbedingungen getestet wie in Beispiel 1 beschrieben. Nach Verlauf von 33 Tagen wird ein Spannungsabfall von weniger als 0,5 Volt gemessen, d. h. weniger als 0,2 %, wobei dieser Wert infolge der möglichen Meßgenauigkeit wiederum günstiger sein kann. Zum Vergleich ist unter denselben Testbedingungen eine bekannte Elektretstruktur getestet worden, mit folgenden Spezifikationen:

```
Substrat                       Material Silizium    Dicke 500 µm
ladungsspeichernde Schicht     Material SiO₂        Dicke   1  µm
Elektretspannung               320 Volt
```

Nach 33 Tagen zeigte diese einen Spannungsabfall von 60 Volt, d. h. einen Abfall von mehr als 18 %.

Die erfindungsgemäße Elektretstruktur zeigt auch nach 100 Tagen einen Spannungsabfall von weniger als 0,5 %.

Im folgenden wird unter Bezugnahme auf Fig. 1 ein Ausführungsbeispiel für ein Herstellungsverfahren für eine erfindungsgemäße Elektretstruktur näher beschreiben.

Auf einem Substrat 1, z. B. einer Siliziumscheibe, die eventuell mit (in der Fig. 1 nicht dargestellt) geätzten Wandlerstrukturen versehen ist, wird mindestens an der Stelle einer zu bildenden Elektretstruktur 10 eine erste Schicht 2 aus $SiO_2$ in einer Dicke von ungefähr 1 µm aufgebracht. Das Aufbringen der ersten Schicht 2 kann durch Abscheidung erfolgen. Wegen der Einfachheit des Verfahrens wird jedoch bevorzugt, die erste Schicht 2 durch thermisches Aufwachsen durch Erhitzen des Substrats 1 in einer oxidierenden Atmosphäre zu erzeugen.

In einem zweiten Schritt wird über der ersten Schicht 2 eine zweite Schicht 3 aus $Si_3N_4$ durch Abscheidung in einer Dicke von ungefähr 20 nm aufgebracht. In einem dritten Schritt wird über der zweiten Schicht 3 eine dritte Schicht 4 aus $SiO_2$ in einer Dicke von ungefähr 3 nm erzeugt. Die zweite Schicht 4 kann durch Abscheidung oder durch thermische Oxidation der Oberfläche der zweiten Schicht 3 erzeugt werden. Wegen der Gleichmäßigkeit der fertigen dritten Schicht 4 wird die Erzeugung durch thermische Oxidation bevorzugt.

In einem vierten Schritt wird die Oberfläche der dritten Schicht 4 durch Behandlung mit HMDS hydrophob gemacht.

Schließlich wird mit Hilfe der an sich bekannten KoronaEntladung durch die dritte Schicht 4 hindurch Ladung in die zweite Schicht 3 eingeführt, um die gewünschte Elektretspannung zu erhalten. Zur Einführung der Ladung ist ebenfalls die Flüssigkontaktaufladung sowie weitere, bekannte Methoden geeignet.

Die Behandlung mit HMDS oder anderen bekannten Stoffen, die geeignet sind, um eine Oberfläche hydrophob zu machen, kann entsprechend der Erfindung sowohl vor als auch nach dem Aufladen der zweiten Schicht 3 durchgeführt werden. Es werden dabei vergleichbare Ergebnisse erhalten, auch wenn die Ergebnisse bei der Behandlung vor dem Aufladen etwas besser sind.

Eine andere Ausführungsform für eine erfindungsgemäße Elektretstruktur ist in Fig. 3 dargestellt. Dabei ist auf einem Substrat 31 aus z. B. einkristallinem Silizium eine ladungsspeichernde Schicht 32 angeordnet. Die ladungsspeichernde Schicht besteht z. B. aus $SiO_2$. Sie hat eine Dicke von z. B. 1 µm.

In die ladungsspeichernde Schicht 32 sind z. B. durch Implantation von Wolfram lokale Störstellen 33 eingebaut.

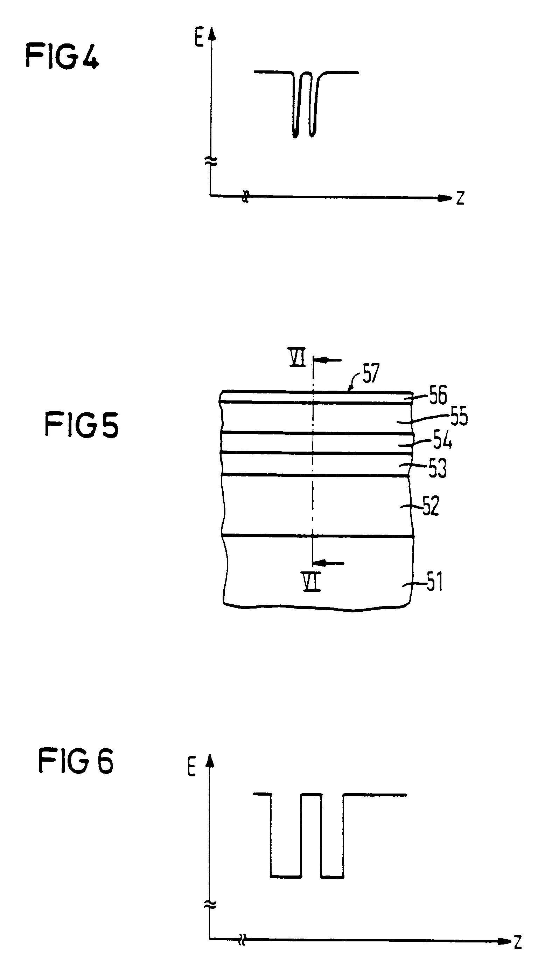

Diese lokalen Störstellen 33 stellen Potentialmulden dar, in denen Ladungsträger eingefangen werden. In Fig. 4 ist der Potentialverlauf entlang dem in Fig. 3 mit IV-IV angedeuteten Schnitt durch die ladungsspeichernde Schicht 32 für negative Ladungsträger, z. B. Elektronen, im Leitungsband schematisch dargestellt. Die Störstellen 33, die sowohl in Richtung der Oberfläche des Substrats als auch in Richtung der entgegengesetzten Oberfläche der ladungsspeichernden Schicht 32 einen Abstand haben, stellen Potentialmulden dar. In diesen wird die zu speichernde Ladung eingefangen. Das umgebende, ungestörte $SiO_2$-Gefüge der ladungsspeichernden Schicht 32 verhindert, daß eingefangene Ladungsträger aus den Störstellen 33 wieder abfließen können. Analoges gilt für positive Ladungsträger, z. B. Löcher, im Valenzband.

Die vom Substrat 31 abgewandte Oberfläche der ladungsspeichernden Schicht 32, die mit dem Bezugszeichen 34 bezeichnet ist, ist durch eine Behandlung mit HMDS hydrophob gemacht.

In einer weiteren Ausführungsform der Erfindung ist auf einem Substrat 51 aus einkristallinem Silizium eine aus fünf Schichten bestehende Schichtenfolge angeordnet (s. Fig. 5). Auf der Oberfläche des Substrats 51 ist eine erste Schicht 52 angeordnet. Die erste Schicht 52 besteht z. B. aus $SiO_2$. Auf der ersten Schicht 52 ist eine zweite Schicht 53 angeordnet. Die zweite Schicht 52 besteht z. B. aus $Si_3N_4$. Auf der zweiten Schicht 53 ist eine dritte Schicht 54 aus z. B. $SiO_2$ angeordnet. Auf der dritten Schicht 54 ist eine vierte Schicht 55 aus z. B. $Si_3N_4$ angeordnet. Auf der vierten Schicht 55 ist eine fünfte Schicht 56 aus z. B. $SiO_2$ angeordnet. Die fünfte Schicht 56 weist an der dem Substrat 51 angewandten Seite eine hydrophobe Oberfläche 57 auf, die durch Behandlung mit HMDS entstanden ist.

Die erste Schicht 52, die zweite Schicht 53, die dritte Schicht 54, die vierte Schicht 55 und die fünfte Schicht 56 bilden zusammen eine ladungsspeichernde Schicht. Die Materialien der Schichten sind so gewählt, daß die zweite Schicht 53 und die vierte Schicht 55 jeweils einen hohen Einfangquerschnitt für Ladungsträger aufweisen, während die erste Schicht 52, die dritte Schicht 54 und die fünfte Schicht 56 eine Potentialbarriere gegen den Abfluß von Ladung aus der zweiten Schicht 53 und der vierten Schicht 55 darstellen. In Fig. 6 ist der Potentialverlauf entlang dem in Fig. 5 mit VI-VI bezeichneten Schnitt durch die ladungsspeichernde Schicht 52, 53, 54, 55, 56 für negative Ladungsträger, z. B. Elektronen, im Leitungsband dargestellt. Der Potentialverlauf zeigt zwei Potentialtöpfe, die am Ort der zweiten Schicht 53 und der vierten Schicht 54 lokalisiert sind. Die Potentialtöpfe werden durch Potentialbarrieren begrenzt, die durch die erste Schicht 52, die dritte Schicht 54 und die fünfte Schicht 56 gebildet werden. Die Ladung, die z. B. mittels einer Korona-Entladung in die ladungsspeichernde Schicht 52, 53, 54, 55, 56 eingebracht wird, wird in der zweiten Schicht 53 und der vierten Schicht 55 gespeichert. Der oben geschilderte Potentialverlauf in der ladungsspeichernden Schicht 52, 53, 54, 55, 56 verhindert ein Abfließen der Ladung aus der zweiten Schicht 53 und der vierten Schicht 55. Analoges gilt für positive Ladungsträger, z. B. Löcher, im Valenzband.

Im Vergleich zu der anhand von Fig. 1 geschilderten Ausführungsform kann in der anhand von Fig. 5 geschilderten Ausführungsform der Erfindung eine größere Ladungsmenge gespeichert werden.

Die erfindungsgemäße Elektretstruktur ist insbesondere geeignet zum Einsatz in einem elektroakustischen Wandler für miniaturisierte Hörgeräte. Der Aufbau eines solchen elektroakustischen Wandlers ist z. B. in den US PS 4 908 805 und US PS 4 910 840 beschrieben. Durch Einsatz der erfindungsgemäßen Elektretstruktur in dem bekannten elektroakustischen Wandler verbessert sich die Stabilität des elektroakustischen Wandlers bei hoher Temperatur und hoher relativer Feuchtigkeit.

Für den Fachmann ist es klar, daß es Möglichkeiten gibt, die aufgeführten Auführunssformen der erfindungsgemäßen Elektretstruktur zu verändern oder zu modifizieren, ohne den Erfindungsgedanken oder den Schutzumfang zu verlassen. Es ist beispielsweise möglich, zwischen dem Substrat und der ladungsspeichernden Schicht eine oder mehrere Schichten vorzusehen, die jedoch keinen Einfluß auf die Eigenschaften der Elektretstruktur haben.

**Patentansprüche**

1. Elektretstruktur,
   - bei der auf einer Oberfläche eines Substrats eine ladungsspeichernde Schicht aus dielektrischem Material angeordnet ist, die mit einer vorgegebenen Ladungsmenge beaufschlagt ist,
   - bei der die ladungsspeichernde Schicht an ihrer der Oberfläche des Substrats abgewandten Seite eine hydrophobe Oberfläche aufweist,
   - bei der die ladungsspeichernde Schicht in ihrer Materialzusammensetzung so inhomogen ist, daß sie erste Bereiche und zweite Bereiche aufweist, wobei die zweiten Bereiche mindestens zwischen den ersten Bereichen und der Oberfläche des Substrats und zwischen den ersten Bereichen und der hydrophoben Oberfläche angeordnet sind und wobei die ersten Bereiche im Vergleich zu den zweiten Bereichen einen hohen Einfangquerschnitt für Ladungsträger der Ladungsmenge aufweisen und wobei die zweiten Bereiche eine Potentialbarriere gegen das Abfließen von Ladungsträgern aus den ersten Bereichen bilden.

2. Elektretstruktur nach Anspruch 1,
   bei der das Substrat aus einkristallinem Silizium besteht.

3. Elektretstruktur nach Anspruch 1 oder 2,
   bei der die ladungsspeichernde Schicht im wesentlichen aus einem isolierenden Material besteht, in dem durch implantierte Fremdatome verursachte Störstellen die ersten Bereiche bilden und in dem das isolierende Material die zweiten Bereiche bildet.

4. Elektretstruktur nach Anspruch 3,
   bei der als isolierendes Material $SiO_2$ und als Fremdatome mindestens eines der Elemente W, Pt, Cr, Ni, Pd oder Ir vorgesehen sind.

5. Elektretstruktur nach Anspruch 1 oder 2,
   - bei der die ladungsspeichernde Schicht mindestens eine erste Schicht, eine zweite Schicht und eine dritte Schicht umfaßt, - bei der die erste Schicht auf der Oberfläche des Substrats, die zweite Schicht auf der ersten Schicht und die dritte Schicht auf der zweiten Schicht angeordnet ist,
   - bei der die zweite Schicht als erste Bereiche wirkt und die erste Schicht und die dritte Schicht als zweite Bereiche wirken.

6. Elektretstruktur nach Anspruch 5,
   bei der die erste Schicht oder die dritte Schicht aus $SiO_2$, $Si_3N_4$ oder $Al_2O_3$ bestehen.

7. Elektretstruktur nach Anspruch 5 oder 6,
   bei der die zweite Schicht aus $Si_3N_4$, $Ta_2O_5$, $Al_2O_3$ oder $TiO_2$ besteht.

8. Elektretstruktur nach einem der Ansprüche 5 bis 7,
   - bei der die ladungsspeichernde Schicht zusätzlich eine vierte Schicht und eine fünfte Schicht umfaßt,
   - bei der die vierte Schicht auf der dritten Schicht und die fünfte Schicht auf der vierten Schicht angeordnet ist,
   - bei der die vierte Schicht als erste Bereiche und die fünfte Schicht als zweite Bereiche wirken.

9. Elektretstruktur nach Anspruch 8,
   bei der die vierte Schicht aus $Si_3N_4$, $Ta_2O_5$, $Al_2O_3$ oder $TiO_2$ besteht.

10. Elektretstruktur nach Anspruch 8 oder 9,
    bei der die fünfte Schicht aus $SiO_2$, $Si_3N_4$ oder $Al_2O_3$ besteht.

11. Elektretstruktur nach Anspruch 5,
    bei der die erste Schicht aus $SiO_2$ besteht und eine Dicke von 0,01 μm bis 5 μm aufweist, bei der die zweite Schicht aus $Si_3N_4$ besteht und eine Dicke im Bereich von 1 nm bis 1 μm aufweist und bei der die dritte Schicht aus $SiO_2$ besteht und eine Dicke von 2 nm bis 100 nm aufweist.

12. Elektretstruktur nach einem der Ansprüche 1 bis 11,
    bei der die hydrophobe Oberfläche der ladungsspeichernden Schicht durch Behandlung mit Hexamethyldisilazan gebildet ist.

13. Wafer mit einer Elektretstruktur nach einem der Ansprüche 1 bis 12.

14. Elektroakustischer Wandler vom Elektrettyp unter Verwenoung einer Elektretstruktur nach einem der Ansprüche 1 bis 12.

15. Herstellverfahren für eine Elektretstruktur, bei dem auf ein Substrat aus Silizium eine ladungsspeichernde Schicht aus dielektrischem Material aufgebracht wird, die erste Bereiche und zweite Bereiche aufweist, wobei die zweiten Bereiche mindestens zwischen den ersten Bereichen und der Oberfläche des Substrats und zwischen den ersten Bereichen und der hydrophoben Oberfläche angeordnet sind und wobei die ersten Bereiche im Vergleich zu den zweiten Bereichen einen holen Einfangquerschnitt für Ladungsträger der Ladungsmenge aufweisen und wobei die zweiten Bereiche eine Potentialbarriere gegen das Abfließen von Ladungsträgern aus den ersten Bereichen bilden, und bei dem die dem Substrat abgewandte Oberfläche der ladungsspeichernden Schicht hydrophob gemacht wird.

16. Herstellverfahren nach Anspruch 15, bei dem die ladungsspeichernde Schicht aus isolierendem Material erzeugt wird und bei dem durch Implantation von Fremdatomen in die ladungsspeichernde Schicht Störstellen erzeugt werden.

17. Herstellverfahren nach Anspruch 16, bei dem als isolierendes Material $SiO_2$ verwendet wird und als Fremdatome mindestens eines der Elemente W, Pt, Cr, Ni, Pd, Ir verwendet wird.

18. Herstellverfahren nach Anspruch 15, bei dem auf die Oberfläche des Substrats eine erste Schicht auf-

EP 0 598 729 B1

gebracht wird, auf die erste Schicht eine zweite Schicht aufgebracht wird und auf die zweite Schicht eine dritte Schicht aufgebracht wird, wobei die zweite Schicht als erste Bereiche wirkt und die erste Schicht und die dritte Schicht als zweite Bereiche wirken.

**19.** Herstellverfahren nach Anspruch 18, bei dem die erste Schicht oder die dritte Schicht aus $SiO_2$, $Si_3N_4$ oder $Al_2O_3$ gebildet werden und bei dem die zweite Schicht aus $Si_3N_4$, $Ta_2O_5$, $Al_2O_3$ oder $TiO_2$ gebildet wird.

**20.** Herstellverfahren nach Anspruch 18, bei dem die erste Schicht aus $SiO_2$ durch thermische Oxidation in einer Dicke im Bereiche von 0,01 μm bis 5 μm gebildet wird, bei dem die zweite Schicht aus $Si_3N_4$ durch Abscheidung in einer Dicke im Bereich von 1 nm bis 1 μm gebildet wird und bei dem die dritte Schicht aus $SiO_2$ durch thermische Oxidation in einer Dicke im Bereich von 2 nm bis 100 nm gebildet wird.

**21.** Herstellverfahren nach Anspruch 18 oder 19, bei dem auf der dritten Schicht eine vierte Schicht und auf der vierten Schicht eine fünfte Schicht gebildet wird, wobei die vierte Schicht als erste Bereiche und die fünfte Schicht als zweite Bereiche wirken.

**22.** Herstellverfahren nach Anspruch 21, bei dem die vierte Schicht aus $Si_3N_4$, $Ta_2O_5$, $Al_2O_3$ oder $TiO_2$ und die fünfte Schicht aus $SiO_2$, $Si_3N_4$ oder $Al_2O_3$ gebildet wird.

**23.** Herstellverfahren nach einem der Ansprüche 15 bis 22, bei dem die ladungsspeichernde Schicht durch eine Coronaentladung mit einer Ladungsmenge beaufschlagt wird.

**24.** Herstellverfahren nach einem der Ansprüche 15 bis 23, bei dem die der Oberfläche des Substrats abgewandte Oberfläche der ladungsspeichernden Schicht durch eine Behandlung mit Hexamethyldisilaxan hydrophob gemacht wird.

**25.** Herstellverfharen nach Anspruch 24, bei dem die Behandlung mit Hexamethyldisilaxan vor dem Beaufschlagen der ladungsspeichernden Schicht mit einer Ladungsmenge erfolgt.

## Claims

**1.** Electret structure,
   - in which a charge-storage layer, which is composed of dielectric material and to which a predetermined charge quantity is applied, is arranged on the surface of a substrate,
   - in which the charge-storage layer has a hydrophobic surface on its side facing away from the surface of the substrate,
   - in which the material composition of the charge-storage layer is so inhomogeneous that it has first and second regions, the second regions being arranged at least between the first regions and the surface of the substrate and between the first regions and the hydrophobic surface, and the first regions having a larger capture cross-section than the second regions for charge carriers of the charge quantity, and the second regions forming a potential barrier against charge carriers being dissipated from the first regions.

**2.** Electret structure according to Claim 1, in which the substrate is composed of monocrystalline silicon.

**3.** Electret structure according to Claim 1 or 2, in which the charge-storage layer is essentially composed of an insulating material in which disturbance points, caused by implanted foreign atoms, form the first regions, and in which the insulating material forms the second regions.

**4.** Electret structure according to Claim 3, in which $SiO_2$ is provided as the insulating material and at least one of the elements W, Pt, Cr, Ni, Pd or Ir is provided as the foreign atoms.

**5.** Electret structure according to Claim 1 or 2,
   - in which the charge-storage layer comprises at least one first layer, one second layer and one third layer,
   - in which the first layer is arranged on the surface of the substrate, the second layer on the first layer and the third layer on the second layer, and

8

- in which the second layer acts as first regions and the first layer and third layer act as second regions.

6. Electret structure according to Claim 5, in which the first layer or the third layer is composed of $SiO_2$, $Si_3N_4$ or $Al_2O_3$.

7. Electret structure according to Claim 5 or 6, in which the second layer is composed of $Si_3N_4$, $Ta_2O_5$, $Al_2O_3$ or $TiO_2$.

8. Electret structure according to one of Claims 5 to 7,
   - in which the charge-storage layer additionally comprises a fourth layer and a fifth layer,
   - in which the fourth layer is arranged on the third layer and the fifth layer on the fourth layer,
   - in which the fourth layer acts as first regions and the fifth layer as second regions.

9. Electret structure according to Claim 8, in which the fourth layer is composed of $Si_3N_4$, $Ta_2O_5$, $Al_2O_3$ or $TiO_2$.

10. Electret structure according to Claim 8 or 9, in which the fifth layer is composed of $SiO_2$, $Si_3N_4$ or $Al_2O_3$.

11. Electret structure according to Claim 5, in which the first layer is composed of $SiO_2$ and has a thickness of 0.01 μm to 5 μm, in which the second layer is composed of $Si_3N_4$ and has a thickness in the range 1 nm to 1 μm, and in which the third layer is composed of $SiO_2$ and has a thickness of 2 nm to 100 nm.

12. Electret structure according to one of Claims 1 to 11, in which the hydrophobic surface of the charge-storage layer is formed by treatment with hexamethyldisilazane.

13. Wafer having an electret structure according to one of Claims 1 to 12.

14. Electroacoustic transducer of the electret type using an electret structure according to one of Claims 1 to 12.

15. Production method for an electret structure, in which a charge-storage layer, which is composed of dielectric material, is applied onto a substrate composed of silicon, which charge-storage layer has first regions and second regions, the second regions being arranged at least between the first regions and the surface of the substrate and between the first regions and the hydrophobic surface, and the first regions having a larger capture cross-section than the second regions for charge carriers of the charge quantity, and the second regions forming a potential barrier against charge carriers being dissipated from the first regions, and in which that surface of the charge-storage layer which faces away from the substrate is made hydrophobic.

16. Production method according to Claim 15, in which the charge-storage layer is produced from insulating material and in which disturbance points are produced in the charge-storage layer by implantation of foreign atoms.

17. Production method according to Claim 16, in which $SiO_2$ is used as the insulating material and at least one of the elements W, Pt, Cr, Ni, Pd or Ir is used as the foreign atoms.

18. Production method according to Claim 15, in which a first layer is applied onto the surface of the substrate, a second layer is applied onto the first layer and a third layer is applied onto the second layer, the second layer acting as first regions and the first layer and the third layer acting as second regions.

19. Production method according to Claim 18, in which the first layer or the third layer is formed from $SiO_2$, $Si_3N_4$ or $Al_2O_3$, and in which the second layer is formed from $Si_3N_4$, $Ta_2O_5$, $Al_2O_3$ or $TiO_2$.

20. Production method according to Claim 18, in which the first layer is formed from $SiO_2$ by thermal oxidation in a thickness in the range from 0.01 μm to 5 μm, in which the second layer is formed from $Si_3N_4$ by deposition in a thickness in the range from 1 nm to 1 μm, and in which the third layer is formed from $SiO_2$ by thermal oxidation in a thickness in the range 2 nm to 100 nm.

**21.** Production method according to Claim 18 or 19, in which a fourth layer is formed on the third layer and a fifth layer is formed on the fourth layer, the fourth layer acting as first regions and the fifth layer acting as second regions.

**22.** Production method according to Claim 21, in which the fourth layer is formed from $Si_3N_4$, $Ta_2O_5$, $Al_2O_3$ or $TiO_2$, and the fifth layer is formed from $SiO_2$, $Si_3N_4$ or $Al_2O_3$.

**23.** Production method according to one of Claims 15 to 22, in which the charge-storage layer is acted on by a charge quantity, by means of a corona discharge.

**24.** Production method according to one of Claims 15 to 23, in which that surface of the charge-storage layer which faces away from the surface of the substrate is made hydrophobic by treatment with hexamethyldisilazane.

**25.** Production method according to Claim 24, in which the treatment with hexamethyldisilazane is carried out before a charge quantity is applied to the charge-storage layer.

**Revendications**

**1.** Structure en électret,
- selon laquelle est disposée sur une surface d'un substrat une couche d'accumulation de charge en matériau diélectrique, qui est soumise à une quantité de charge donnée,
- selon laquelle la couche d'accumulation de charge présente sur sa face opposée à la surface du substrat une surface hydrophobe,
- selon laquelle la couche d'accumulation de charge est tellement hétérogène dans sa composition de matériaux, qu'elle comporte des premières zones et des secondes zones, les secondes zones étant disposées au moins entre les premières zones et la surface du substrat et entre les premières zones et la surface hydrophobe, et les premières zones présentant par rapport aux deuxièmes zones une forte section de capture pour des porteurs de charge de la quantité de charge et les deuxièmes zones formant une barrière de potentiel contre l'écoulement de porteurs de charge des premières zones.

**2.** Structure en électret selon la revendication 1, selon laquelle le substrat est composé de silicium monocristallin.

**3.** Structure en électret selon l'une des revendications 1 ou 2, selon laquelle la couche d'accumulation de charge est composée essentiellement d'un matériau isolant, dans lequel des pièges obtenus par implantation d'atomes étrangers forment les premières zones et dans lequel le matériau isolant forme les secondes zones.

**4.** Structure en électret selon la revendication 3, selon laquelle on utilise comme matériau isolant du $SiO_2$ et comme atomes étrangers au moins l'un des éléments W, Pt, Cr, Ni, Pd ou Ir.

**5.** Structure en électret selon l'une des revendications 1 ou 2,
- selon laquelle la couche d'accumulation de charge comporte au moins une première couche, une deuxième couche et une troisième couche,
- selon laquelle la première couche est disposée sur la surface du substrat, la deuxième couche sur la première couche et la troisième couche sur la deuxième couche,
- selon laquelle la deuxième couche fait fonction de premières zones et la première couche et la troisième couche font fonction de secondes zones.

**6.** Structure en électret selon la revendication 5, selon laquelle la première couche ou la troisième couche sont composées de $SiO_2$, $Si_3N_4$ ou $Al_2O_3$.

**7.** Structure en électret selon l'une des revendications 5 ou 6, selon laquelle la deuxième couche est composée de $Si_3N_4$, $Ta_2O_5$, $Al_2O_3$ ou $TiO_2$.

8. Structure en électret selon l'une des revendications 5 à 7,
   - selon laquelle la couche d'accumulation de charge comporte en plus une quatrième couche et une cinquième couche,
   - selon laquelle la quatrième couche est disposée sur la troisième couche et la cinquième couche sur la quatrième couche,
   - selon laquelle la quatrième couche fait fonction de premières zones et la cinquième couche de secondes zones.

9. Structure en électret selon la revendication 8, selon laquelle la quatrième couche est composée de $Si_3N_4$, $Ta_2O_5$, $Al_2O_3$ ou $TiO_2$.

10. Structure en électret selon l'une des revendications 8 ou 9, selon laquelle la cinquième couche est composée de $SiO_2$, $Si_3N_4$ ou $Al_2O_3$.

11. Structure en électret selon la revendication 5, selon laquelle la première couche est composée de $SiO_2$ et présente une épaisseur comprise entre 0,01 $\mu m$ et 5 $\mu m$, selon laquelle la deuxième couche est composée de $Si_3N_4$ et présente une épaisseur comprise entre 1 nm et 1$\mu m$ et selon laquelle la troisième couche est composée de $SiO_2$ et présente une épaisseur comprise entre 2 nm et 5 $\mu m$ à 100 nm.

12. Structure en électret selon l'une des revendications 1 à 11, selon laquelle la surface hydrophobe de la couche d'accumulation de charge est formée par traitement à l'hexaméthyldisilazane.

13. Tranche de silicium comportant une structure en électret selon l'une des revendications 1 à 12.

14. Convertisseur électroacoustique du type électret par l'utilisation d'une structure en électret selon l'une des revendications 1 à 12.

15. Procédé de fabrication d'une structure en électret, selon lequel on applique sur un substrat en silicium une couche d'accumulation de charge en matériau diélectrique, laquelle comporte des premières zones et des secondes zones, les secondes zones étant disposées au moins entre les premières zones et la surface du substrat et entre les premières zones et la surface hydrophobe, et les premières zones présentant par rapport aux secondes zones une forte section de capture pour porteurs de charge de la quantité de charge et les secondes zones formant une barrière de potentiel contre l'écoulement de porteurs de charge des premières zones, et selon lequel la surface opposée au substrat de la couche d'accumulation de charge est rendue hydrophobe.

16. Procédé de fabrication selon la revendication 15, selon lequel la couche d'accumulation de charge est fabriquée en un matériau isolant et selon lequel on produit des pièges par implantation d'atomes étrangers dans la couche d'accumulation de charge.

17. Procédé de fabrication selon la revendication 16, selon lequel on utilise comme matériau isolant du $SiO_2$ et comme atomes étrangers au moins l'un des éléments W, Pt, Cr, Ni, Pd ou Ir.

18. Procédé de fabrication selon la revendication 15, selon lequel on applique sur la surface du substrat une première couche, sur la première couche une deuxième couche et sur la deuxième couche une troisième couche, la deuxième couche faisant fonction de premières zones et la première couche et la troisième couche de secondes zones.

19. Procédé de fabrication selon la revendication 18, selon lequel la première couche ou la troisième couche sont formées de $SiO_2$, $Si_3N_4$ ou $Al_2O_3$ et selon lequel la deuxième couche est formée de $Si_3N_4$, $Ta_2O_5$, $Al_2O_3$ ou $TiO_2$.

20. Procédé de fabrication selon la revendication 18, selon lequel la première couche en $SiO_2$ est formée par oxydation thermique et présente une épaisseur comprise entre 0,01 $\mu m$ et 5 $\mu m$, selon lequel la deuxième couche en $Si_3N_4$ est formée par séparation et présente une épaisseur comprise entre 1 nm et 1 $\mu m$ et selon lequel la troisième couche en $SiO_2$ est formée par oxydation thermique et présente une épaisseur comprise entre 2 nm et 100 nm.

21. Procédé de fabrication selon l'une des revendications 18 ou 19, selon lequel on forme sur la troisième couche une quatrième couche et sur la quatrième couche une cinquième couche, la quatrième couche faisant fonction de premières zones et la cinquième couche faisant fonction de secondes zones.

22. Procédé de fabrication selon la revendication 21, selon lequel la quatrième couche est formée de $Si_3N_4$, $Ta_2O_5$, $Al_2O_3$ ou $TiO_2$ et la cinquième couche de $SiO_2$, $Si_3N_4$ ou $Al_2O_3$.

23. Procédé de fabrication selon l'une des revendications 15 à 22, selon lequel la couche d'accumulation de charge est soumise à une quantité de charge par une décharge Corona.

24. Procédé de fabrication selon l'une des revendications 15 à 23, selon lequel la surface de la couche d'accumulation de charge, opposée à la surface du substrat, est rendue hydrophobe par un traitement à l'hexaméthyldisilazane.

25. Procédé de fabrication selon la revendication 24, selon lequel on effectue le traitement à l'hexaméthyldisilazane avant de soumettre la couche d'accumulation de charge à une quantité de charge.

FIG 1

FIG 2

FIG 3

FIG 4

FIG 5

FIG 6